# EUROPEAN PATENT APPLICATION

(11) **EP 1 900 545 A1**
(43) Date of publication of application: **19.03.2008**
(21) Application number: 07116373.7
(22) Date of filing: 13.09.2007
(51) Int. Cl.: B60B 7/00

(54) **Aircraft wheel noise reduction fairing and aircraft wheel including a noise reduction fairing**

(30) Priority: 15.09.2006 US 521432
(71) Applicant: Honeywell International Inc., Morristown, New Jersey 07962 (US)
(72) Inventor: Parker, Charles A., Granger, IN 46530 (US); Spray, Matthew D., South Bend, IN 44617 (US); McAfee, David D., Niles, MI 49120 (US); Tong, Lei, South Bend, IN 46628 (US); Hodge, Steve, South Bend, IN 46635 (US)
(74) Representative: Buckley, Guy Julian

(57) **Abstract**

An aircraft wheel noise reduction fairing (8) includes a disk (10) having first and second sides (12, 14) and a plurality of circumferentially disposed openings (16) between the first side (12) and the second side (14) and at least one mesh structure (24,26) connected to the second side (14) of the disk (10) overlying the plurality of circumferentially disposed openings (16). Also the combination of an aircraft wheel (30) and a noise reduction fairing (8) wherein the aircraft wheel (30) includes a hub (32) surrounding a wheel axis of rotation (34), a web (36) projecting from the hub (32) and a cylindrical wall (40) having an inner surface (42) and an outer surface (44) connected to the web (36) and surrounding the axis of rotation (34). The wall (40) has an end edge (46) spaced from the web (36), a flange (48) spaced from the end edge (46) and projecting from the cylindrical wall (40), and the fairing (8) includes a plurality of circumferentially disposed openings and is mounted in the cylindrical space defined by the cylindrical wall (40).

## Description

### FIELD OF THE INVENTION

The present invention is directed to an aircraft wheel noise reduction fairing and to an aircraft wheel on which a noise reduction fairing is mounted, and, more specifically, toward an aircraft wheel noise reduction fairing having a plurality of circumferentially disposed openings and to an aircraft wheel having a plurality of bolt holes on which a noise reduction fairing having a plurality of circumferentially disposed openings is mounted.

### BACKGROUND OF THE INVENTION

Aircraft produce significant environmental noise, particularly during take-off and landing. This noise is produced by the aircraft engines, by generators and other aircraft systems, and by air flowing over an aircraft. These noises combine to produce the overall "noise signature" of an aircraft. It is generally desirable to reduce the noise signature of aircraft, especially when they take off and land at airports near populated areas.

Noise produced by air flowing past the landing gear, in particular the wheels and brakes of an aircraft, is a noticeable component of the noise signature of many aircraft. Airflow past aircraft wheels also plays a role in cooling aircraft brakes. It may be possible to reduce an aircraft noise signature by directing flowing air away from the wheels and brakes. However, if no air reaches the brakes, they may overheat and be damaged. Care must also be taken to ensure that the airflow redirecting structures do not themselves have an objectionable noise signature. It would be beneficial to provide an arrangement for reducing the component of an aircraft noise signature caused by the landing gear and wheels without adversely affecting brake cooling.

### SUMNIARY OF THE INVENTION

These problems and others are addressed by the present invention, a first aspect of which comprises an aircraft wheel noise reduction fairing that includes a disk having a first side and a second side and a plurality of circumferentially disposed openings between the first side and the second side. At least one mesh structure is connected to the second side of the disk and overlies the plurality of circumferentially disposed openings.

Another aspect of the invention comprises an aircraft wheel that includes a hub surrounding the wheel axis of rotation, a web projecting from the hub, and a cylindrical wall spaced from the hub, connected to the web and surrounding the axis of rotation. The cylindrical wall has an inner surface and an outer surface and an end edge spaced from the web. A noise reduction fairing including a plurality of circumferentially disposed openings is mounted in the cylindrical space defined by the cylindrical wall.

### BRIEF DESCRIPTION OF THE DRAWINGS

These and other aspects and features of embodiments of the present invention will be better understood after a reading of the following detailed description together with the attached drawings, wherein:

Fig. 1 is front plan view of an aircraft wheel noise reduction fairing according to an embodiment of the present invention;

Fig. 2 is a rear plan view of the aircraft wheel noise reduction fairing of Fig. 1;

Fig. 3 is a sectional elevation view taken along line III-III in Fig. 1;

Fig. 4 is a perspective view of the aircraft wheel noise reduction fairing of Fig. 1 attached to an outboard half of an aircraft wheel;

Fig. 5 is a sectional perspective view taken along line V-V of Fig. 4; and

Fig. 6 is a rear plan view of the fairing of Fig. 1 using an alternate arrangement of mesh over openings in the fairing.

### DETAILED DESCRIPTION

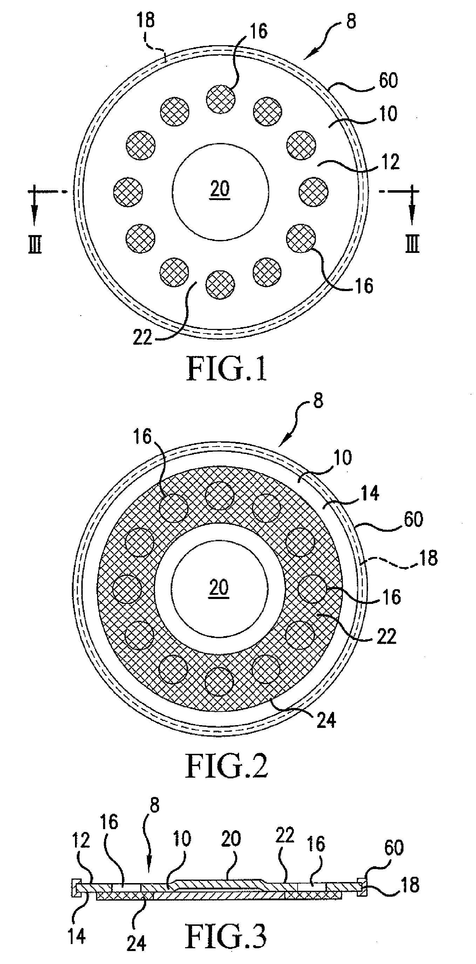

Referring now to the drawings, wherein the showings are for purposes of illustrating presently preferred embodiments of the invention only and not for the purpose of limiting same, Figure 1 illustrates an aircraft wheel noise reduction fairing 8 comprising an annular disk-shaped body 10 having a first side 12, a second side 14 (illustrated in Fig. 2) a plurality of circumferentially disposed openings 16 between first side 12 and second side 14, and an outer periphery 18. Fairing body 10 is generally planar but may include a central portion 20 that is slightly convex to conform to the shape of a hubcap 50 to which it may be attached as described herein. Central portion 20 is surrounded by an annular, planar region 22 in which openings 16 are formed.

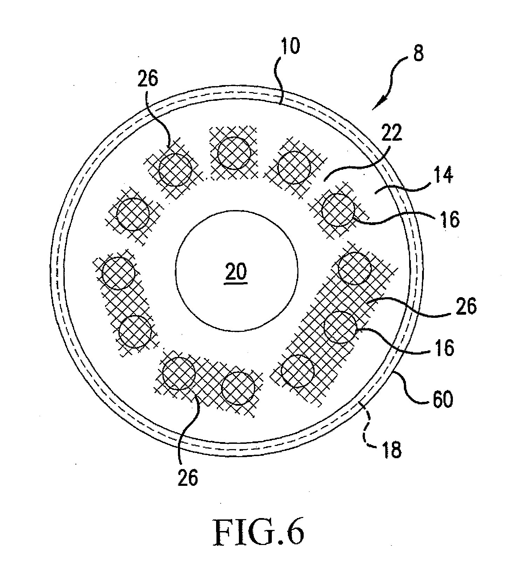

As best illustrated in Figure 2, fairing 8 also includes a mesh ring 24 on second side 14 of body 10 overlying the plurality of openings 16 and connected to second side 14. Fairing body 8 is preferably formed from a metal such as aluminum or steel, but may alternately be formed from various known plastics. Mesh ring 24 is also preferably formed from a metal mesh, such as a wire or expanded metal mesh but may alternately be fabricated from a suitable plastic or other non-metallic material. Mesh ring 24 may be attached to fairing body 10 in any manner suitable to the materials from which the fairing body 10 and mesh ring 24 are formed. For example, welding may be used when both elements are formed from appropriate metals and suitable adhesives may be used when the elements are formed form metals or common plastics. And, while a continuous mesh ring 24 is illustrated in Figure 2, individual mesh panels 26, illustrated in Figure 6, covering individuals or several adjacent openings 16 could alternately be used.

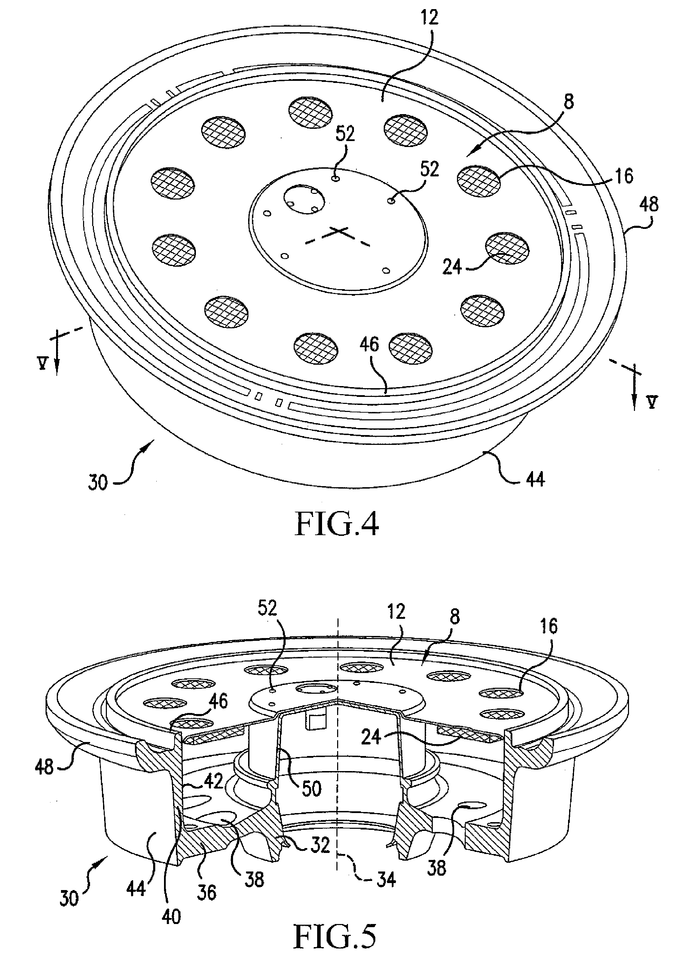

In Figures 4 and 5, fairing 8 is illustrated mounted on the outboard half of an aircraft wheel 30. Wheel 30 includes a hub 32 around a wheel axis of rotation 34, a web 36 projecting from hub 32 generally normal to the axis of rotation 34 and including a plurality of tie bolt holes 38, a cylindrical wall 40 concentric with hub 32 and having an inner surface 42, an outer surface 44, and an end edge 46. A flange 48 forms a rim of wheel 20 and projects from the outer surface 44 of cylindrical wall 40 at a small distance from end edge 46. A hubcap 50 may be attached to hub 32 as illustrated in Fig. 5. In use, a tire (not illustrated) would be attached over surface 44 and be held in place by flange 48.

In a disclosed embodiment, fairing 8 is connected to wheel 20 by attaching fairing body 10 to hubcap 50 using a plurality of screws or similar fasteners 52. While it is preferable to use removable fasteners 52 such as screws so that fairing 8 can be removed to allow access to tie bolts (not illustrated) extending thorough holes 38 in web 36 and the inflation valve (not illustrated) in the web 36, suitable adhesives may be used between central portion 20 of fairing body 10 and hubcap 50 and/or between outer periphery 18 and inner surface 42 of cylindrical wall 40 to provide more secure attachment.

Fairing 8 is mounted in the opening defined by inner surface 42 of cylindrical wall 40 and substantially closes this opening and covers hub 32. In the disclosed embodiment, the fairing body 10 is mounted in the opening flush with or at a small distance inwardly from end edge 46 and does not project beyond the plane in which end edge 46 lies. In this embodiment, fairing body 10 has a diameter less than the diameter of the opening defined by inner surface 42. A flexible material 60 such as a rubber gasket may be used to fill the gap between the outer edge 18 of fairing body 10 and the inner wall 42 of web 40. This reduces the noise signature of the fairing.

While a fairing without openings might provide a smaller noise signature than the disclosed fairing 8, such a fairing would interfere substantially with air flow to hub 32, web 36 and to brakes (not illustrated) which would typically be mounted on the side of web 36 opposite fairing 8. Openings 16 provide air flow and allow adequate cooling for brakes and wheels. In addition, openings 16 allow for the inspection of tie bolts (not shown) which extend through holes 38 in web 36 without the need to remove fairing 8. It is generally desirable for one opening 16 to be aligned with or otherwise provide visibility to each hole 38 to provide for easy inspection of tie bolts.

It is believed that openings 16 may adequately reduce the noise signature of aircraft landing gear provided with such a fairing. However, the openings 16 themselves will also contribute to the noise signature of an aircraft on which fairing 8 is mounted. It therefore may be desirable to use mesh ring 24 (Fig. 2) or individual mesh patches 26 (Fig. 6) to cover some or all openings 16 in order to reduce the noise signature of openings 16. Mesh ring 24 or mesh patches 26 should thus reduce the noise signature of openings 16 while still allowing tie bolt inspection and air flow for cooling.

The present invention has been described herein in terms of several preferred embodiments. Obvious additions and modifications to these embodiments will become apparent to those of ordinary skill in the relevant art upon review of the foregoing description. It is intended that all such obvious modifications and additions form a part of the present invention to the extent they fall within the scope of the several claims appended hereto.

## Claims

1. An aircraft wheel noise reduction fairing (8) comprising:
a disk (10) having a first side (12) and a second side (14) and a plurality of circumferentially disposed openings (16) between said first side (12) and said second side (14); and
at least one mesh structure (24, 26) connected to the second side (14) of the disk (10) and overlying the plurality of circumferentially disposed openings (16).

2. The aircraft wheel noise reduction fairing (8) of claim 1 wherein said disk (10) comprises a planar annular portion (22) surrounding a convex portion (20) and wherein said plurality of circumferentially disposed openings (16) are formed in said annular portion (22).

3. An aircraft wheel (30) comprising the aircraft wheel noise reduction fairing (8) of claim 1.

4. The aircraft wheel noise reduction fairing (8) of claim 1 wherein said at least one mesh structure comprises a mesh ring (24) or multiple mesh segments (26).

5. An aircraft wheel (30) comprising:
a hub (32) surrounding a wheel axis of rotation (34);
a web (36) projecting from said hub (32);
a cylindrical wall (40) spaced from said hub (32), connected to said web (36) and surrounding said axis of rotation (34), said cylindrical wall (40) having an inner surface (42) and an outer surface (44) and an end edge (46) spaced from said web (36);
a flange (48) spaced from said end edge (46) and projecting from said cylindrical wall (40) away from said hub (32); and
a noise reduction fairing (8) comprising a disk (10) having a first side (12) and a second side (14) and a plurality of circumferentially disposed openings (16) between said first side (12) and said second side (14) mounted in the cylindrical space defined by said cylindrical wall (40).

6. The aircraft wheel (30) of claim 5 wherein said aircraft wheel (30) includes a hub cap (50) between said noise reduction fairing (8) and said hub (32) and at least one fastener (52) connecting said noise reduction fairing (8) to said hub cap (50).

7. The aircraft wheel (30) of claim 5 wherein said noise reduction fairing (8) includes a central portion (20) conforming to a shape of the hubcap (50) and an annular, planar, outer portion (22).

8. The aircraft wheel (30) of claim 5 wherein said end edge (46) lies in a plane and said fairing (8) lies entirely to one side of said plane.

9. The aircraft wheel (30) of claim 5 including a mesh (24, 26) covering at least some of said annular openings (16), the mesh (24, 26) comprising an annular band of mesh (24) or individual mesh segments (26) covering each of said plurality of circumferential openings (16), the mesh (24, 26) being mounted on the side (14) of said noise reduction fairing (8) facing said web (36).

10. The aircraft wheel (30) of claim 5 wherein said noise reduction fairing (8) has a diameter less than the diameter of said cylindrical space defined by said cylindrical wall (40) and includes a flexible material (60) filling a gap between said noise reduction fairing (8) and said cylindrical wall (40).
